# EUROPÄISCHE PATENTANMELDUNG

(11) **EP 3 510 968 A1**
(43) Veröffentlichungstag der Anmeldung: **17.07.2019**
(21) Anmeldenummer: 19153351.2
(22) Anmeldetag: 11.09.2014
(51) Int. Cl.: A61C 13/00, A61C 13/36

(54) **DENTALE TRANSFERSCHABLONE**

(30) Priorität: 17.10.2013 EP 13189179
(62) Teilanmeldung aus: 14184493.6
(71) Anmelder: Ivoclar Vivadent AG, 9494 Schaan (LI)
(72) Erfinder: Frei, Christian, 39025 Naturns (IT)
(74) Vertreter: Baronetzky, Klaus

(57) **Zusammenfassung**

Die Erfindung betrifft eine Dental-Transferschablonenanordnung, mit einer Transferschablone und einer Prothesenbasis, die insbesondere beide mit der gleichen CAD/CAM-Vorrichtung hergestellt sind,
- wobei beide eine Vielzahl von Ausnehmungen für Zähne aufweisen, wobei in die Transferschablonen-Ausnehmungen inzisale und/oder okklusale Bereiche und in die Prothesenbasis-Ausnehmungen zervikale Bereiche von Zähnen passen,
- wobei die Zähne je in die Prothesenbasis-Ausnehmungen einzukleben sind, dadurch gekennzeichnet, dass
- dass in der Okklusalebene eine Biss-Sperre (18) der Transferschablone (20), die einen Zahnreihenschluss verhindert, vorgesehen ist, die Dicke welcher Sperre insbesondere etwa 2 bis 8 mm beträgt, und
- dass die Zahn-Ausnehmungen (21) von der Biss-Sperre (18) ausgehend in einander entgegengesetzten Richtungen, die Oberkiefer und Unterkiefer entsprechen, offen sind.
- dass Zähne in der Ausnehmungen (21) der Transferschablone (20) gehalten sind und insbesondere die Transferschablone (20) für die Zähne (33, 35) zum basalen Einkürzen der Zähne verwendbar ist, und

## Beschreibung

Die Erfindung betrifft eine Dental-Transferschablonenanordnung gemäß dem Oberbegriff von Anspruch 1.

Bei mittels CAD/CAM gefertigten Prothesen ist es notwendig, künstliche Zähne mit einer Prothesenbasis zu verkleben. Die künstlichen Zähne können sowohl konventionell (industriell) hergestellt als auch mittels CAD/CAM gefertigt sein und aus unterschiedlichen Materialien bestehen.

Um die künstlichen Zähne dauerhaft in der Kavität einer Prothesenbasis zu verkleben, ist eine korrekte Positionierung des jeweiligen Zahnes relativ zur Prothesenbasis notwendig. Dabei ist jeder Zahn oder jede Zahngruppe einzeln und manuell auf die korrekte Passung zu kontrollieren und anschließend einzukleben.

Für die Überprüfung ist bereits eine sogenannte Transferschablone vorgeschlagen worden. Eine derartige Transferschablone ist eine insbesondere per CAD/CAM hergestellte Negativform, wobei Ausnehmungen zum Lagern der Zähne vorgesehen sind. Die Zähne und/oder Zahngruppen werden in den Ausnehmungen der Schablone vorläufig gelagert und zum Verkleben in den Kavitäten der Prothesenbasis dorthin übertragen. Vor/bei dem Verkleben wird mittels der Schablone eine sichere und korrekte Positionierung der Zähne in den Kavitäten der Prothesenbasis gewährleistet.

Eine solche Transferschablone kann von der CAD/CAM-Vorrichtung basierend auf Scan- und CAD- Daten erzeugt werden, die beiden Daten jeweils aus einem dreidimensionalen Scan einer Mundsituation eines Patienten und aus einer Schablonebibliothek in der CAD-Software gewonnen sind. Ein entsprechende Prothesenbasis wird insbesondere von der gleichen CAD/CAM-Vorrichtung basierend auf insbesondere den gleichen Scandaten und den CAD-Daten aus einer Prothesenbasisbibliothek in der CAD-Software erzeugt, so dass die künstlichen Zähne mit Hilfe der Transferschablone transferiert und in der Kavität der Prothesenbasis positioniert und eingeklebt werden können.

Eine derartige Dental-Transferschablone ist aus der WO 2012/155161 A1 bekannt. Gemäß der WO 2012/155161 A1 werden die Prothesenzähne mittels einer dort als "Hilfshaltevorrichtung" bezeichneten Transferschablone in eine definierte Position gebracht und dort gehalten.

Eine weitere derartige Dental-Transferschablone ist aus der EP 2 030 590 A1 bekannt. Jeder einzelne Prothesenzahn wird vorläufig mittels Wachs oder Harz in der Ausnehmung der dortigen Transferschablone gehalten. Die dortige Stange 18 der Transferschablone ermöglicht eine manuelle Orientierung und Positionierung der Zähne in der Kavitäten der Prothesenbasis.

Solche und auch die anderen heutigen Dental-Transferschablonen vermögen jedoch die künstlichen Zähne nur entweder beim Oberkiefer oder beim Unterkiefer an die jeweilige Prothesenbasis zu positionieren. Wenn Prothetik bei den beiden Kiefern von Patienten erforderlich ist, ist es nur möglich, zwei Transferschablonen (eine für Ober- und die andere für Unterkiefer) zu verwenden und bei der Implementierung nacheinander einzusetzen, was zu einem doppelten Zeitaufwand führt.

Ferner besteht bei der Verwendung von konfektionierten Zähnen das Problem, dass wegen nicht individualisierter Zahnlänge der konfektionierten Zähne Störkontakte auf den Okklusionsflächen auftreten, welche Störkontakte zwar im virtuellen Artikulator in der Software dargestellt und aufgezeigt, aber nicht bei der Fertigstellung der Prothese berücksichtigt werden können. Eine praktikable Lösung dieses Problems, ohne den gefertigten Zahnersatz in einen Artikulator zu übertragen, ist bisher nicht bekannt.

Wenn die Klebeverbindung der künstlichen Zähne an der Prothesenbasis nicht fest genug ist, besteht außerdem bei der Kaubewegung oder anderen Zahnbewegungen im Mund die Gefahr, dass die Zähne nicht stabil genug in der Kavität der Prothesenbasis gehalten sind und eventuell sogar aus der Prothesenbasis herausfallen.

Daher liegt der Erfindung die Aufgabe zugrunde, eine Dental-Transferschablonenanordnung gemäß dem Oberbegriff von Anspruch 1 zu schaffen, die den Zeitaufwand bei der Prothesenherstellung für beide Kiefer verringert, bei Verwendung von konfektionierten Zähnen Störkontakte auf den Okklusionsflächen vermeidet und eine sichere Klebung von Zahnersatz an der Prothesenbasis gewährleisten kann.

Diese Aufgabe wird erfindungsgemäß durch Anspruch 1 gelöst. Vorteilhafte Weiterbildungen ergeben sich aus den Unteransprüchen.

Erfindungsgemäß ist es vorgesehen, dass in der Okklusalebene eine Biss-Sperre der Transferschablone, die einen Zahnreihenschluss verhindert, vorgesehen ist, die Dicke welcher Sperre insbesondere etwa 2 bis 8 mm beträgt, und dass die Zahn-Ausnehmungen von der Biss-Sperre ausgehend in einander entgegengesetzten Richtungen, die Oberkiefer und Unterkiefer entsprechen, offen sind.

Diese Biss-Sperre unterteilt die erfindungsgemäße Transferschablone in je ein Oberkieferteil und ein Unterkieferteil, welche Schablone gleichzeitig für beide Kiefer das Transferieren der Zähne, die Positionierung der Zähne in die Kavität der Prothesenbasis ermöglicht.

Erfindungsgemäß ist es weiter vorgesehen, dass die Transferschablone nur entweder für Ober- oder Unterkiefer verwendet werden kann.

Ferner steift überraschend erfindungsgemäß diese Biss-Sperre die Transferschablone aus, wenn die Transferschablone gleichzeitig für die Zähne an den Ober- und Unterkiefer verwendet wird.

Nachdem konfektionierte Zähne in der Ausnehmungen der Transferschablone gehalten sind, ist außerdem erfindungsgemäß die Transferschablone für die Zähne an beiden Kiefern zum basalen Enkürzen der Zähne verwendbar.

Darüber hinaus ist erfindungsgemäß eine sichere Klebung jedes Zahnes in der Prothesenbasis gewährleistet. Die Klebefläche jedes Zahnes in der Prothesenbasis weist erfindungsgemäß einen vorgegebenen minimalen Schwellenwert, insbesondere mindestens 10 mm², bevorzugt mindestens 18 mm², und besonders bevorzugt mindestens 25 mm², auf, welcher Schwellenwert insbesondere in der CAD-Software der CAD/CAM-Vorrichtung zur Herstellung der Prothesenbasis festgelegt ist. Dieser Wert ist auch - je nach Klebstoff - steigerbar, beispielhaft auf mindestens 39 mm².

In vorteilhafter Ausgestaltung ist es vorgesehen, dass in Größe und Lage die Ausnehmungen der Transferschablone der Aufstellung der Oberkiefer- und Unterkiefer-Zahnreihen entspricht.

In vorteilhafter Ausgestaltung ist es vorgesehen, dass die Transferschablone in ihrer Schablonenform mit Ausnehmungen für Zähne per Rapid-Prototyping oder per Fräsen erzeugt ist. Die Innenflächen der Ausnehmungen in der Transferschablone, die den okklusalen/inzisalen Außenflächen der Zähne entsprechen, sind basierend auf einer Zahnbibliothek erzeugt, welche Außenflächen in der CAD/CAM-Vorrichtung entsprechend insbesondere vorgefertigten Zähnen abgespeichert sind.

In vorteilhafter Ausgestaltung ist es vorgesehen, dass die Transferschablone aus nicht steifen und im Vergleich mit den Zähnen nachgiebigen Material, insbesondere aus Kunststoff, herstellt ist, so dass die Zähne in der Ausnehmungen der Transferschablone mit Hilfe einer begrenzten Verformungskraft an den Innenflächen der Ausnehmungen der Transferschablone gehalten und in die Prothesenbasis transferiert werden können.

In vorteilhafter Ausgestaltung ist es vorgesehen, dass die Transferschablone aus geeigneten Materialien, insbesondere aus Metall oder Kunststoff, bevorzugt zur besseren Kontrolle der positionierten Zähne aus transparentem Kunststoff, hergestellt ist.

In vorteilhafter Ausgestaltung ist es vorgesehen, dass bei der Berechnung der Flächen der Ausdehnungen in der Transferschablone ein herstellungsbedingter Schrumpfungsfaktor der konfektionierten Zähne von etwa ±100 µm berücksichtigt wird, welcher Faktor dem Schrumpfungsgrad der konfektionierten Zähne wegen thermischer Ausdehnung entspricht.

In vorteilhafter Ausgestaltung ist es vorgesehen, dass die Höhenlage der Zähne in der Transferschablone basierend auf CAD- und Scandaten und damit indirekt auf Patientendaten festgelegt ist.

Bei Verwendung von konfektionierten Zähnen ragen wegen der nicht individualisierten Zahnlänge einige Zähne über die basale Seite der Prothesenbasis hinaus,. Erfindungsgemäß können die Prothesenbasis durchtretende Bereiche eines Zahns, dessen Höhe größer als die Höhenerstreckung von Transferschablone und Prothesenbasis im aufeinander gelegten Zustand ist, mit umgebenden Oberflächen im Wesentlichen bündig abschleifbar sind.

In vorteilhafter Ausgestaltung ist es vorgesehen, dass die Transferschablone durch die CAD/CAM-Vorrichtung erzeugte Zahnausnehmungen aufweist, die so eine Position des Zahns im Raum festlegen, wobei jeder Zahn insbesondere 5% bis 90% seiner Längserstreckung von der Transferschablone gehalten wird.

In vorteilhafter Ausgestaltung ist es vorgesehen, dass die Transferschablone und die Prothesenbasis im zusammengesetzten Zustand einen die Zähne umgebenden Freiraum belassen, dessen Höhe insbesondere teilweise 0% bis 50%, bevorzugt etwa 20% der Höhe der Zähne beträgt.

In vorteilhafter Ausgestaltung ist es vorgesehen, dass die Transferschablone und die Prothesenbasis im aufeinandergesetzten Zustand über eine Mehrzahl, insbesondere drei Stützstellen, aneinander abgestützt und in eine definierte Relativposition bei eingesetzten Zähnen gebracht sind.

In vorteilhafter Ausgestaltung ist es vorgesehen, dass die Transferschablone zusammen mit der Prothesenbasis eingesetzte Zähne in allen drei Raumrichtungen fest lagert, und in diesem Zustand sind erfindungsgemäß etwaiger über die basale Seite der Prothesenbasis hinausragende Zahnbereich ohne zusätzliche und separate Stützkontakte für die einzelnen Zähne abschleif- oder abfräsbar.

In vorteilhafter Ausgestaltung ist es vorgesehen, dass der Schwellenwert der Klebefläche der Zähne an der Prothesenbasis unterschiedlich für unterschiedliche Zahntypen - Schneidezähne, Prämolaren und Molaren - ist und zur entsprechenden Anpassung eine Vergrößerung der Klebefläche durch die CAD-Software der CAD/CAM-Vorrichtung angefordert wird.

In vorteilhafter Ausgestaltung ist es vorgesehen, dass der Schwellenwert der Klebefläche der Zähne an der Prothesenbasis unterschiedlich für unterschiedliche Zähne, insbesondere für konfektionierte Zähne mit unterschiedlichen Zahnlängen ist, und zur entsprechenden Anpassung eine Vergrößerung der Klebefläche durch die CAD-Software der CAD/ CAM-Vorrichtung angefordert wird.

In vorteilhafter Ausgestaltung ist es vorgesehen, dass zur Vergrößerung der Klebefläche der Zähne an der Prothesenbasis sich der zervikale Bereich der Ausnehmungen der Prothesenbasis in die inzisale Richtung mittels der CAD/CAM-Vorrichtung erstrecken kann.

In vorteilhafter Ausgestaltung ist es vorgesehen, dass die CAD/CAM-Vorrichtung bei der Festlegung der Höhenlage der Zähne in den Ausnehmungen in der Prothesenbasis dort einen Klebespalt erfindungsgemäß mit einer vorgegebenen Dicke berücksichtigt, insbesondere teilweise 0 µm bis 500 µm, bevorzugt 50 µm bis 250 µm, dass also die Außenform um diesen Spalt größer als der zervikale Bereich der Zähne ausgelegt und so die Höhenlage jedes Zahns exakt festgelegt ist.

In vorteilhafter Ausgestaltung ist es vorgesehen, dass auf der vestibulären Seite an jedem Zahn Fenster-Aussparungen angeordnet sind, um die korrekte Höhenlage der Zähne in den Innenflächen der Ausnehmungen in der Transferschablone zu kontrollieren.

In vorteilhafter Ausgestaltung ist es vorgesehen, dass durch die Transferschablone die relative dreidimensionale Lage von Oberkiefer- und Unterkieferprothese fixiert ist, so dass die fertigen Prothesen in einen um die vertikale Achse verschiebbaren Artikulator/Okkludator gebracht werden können, um eine okklusale Korrektur an den Prothesenzähnen vorzunehmen.

In vorteilhafter Ausgestaltung ist es vorgesehen, dass die Transferschablone eine Vielzahl von Ausnehmungen für Zähne aufweist, wobei in die Transferschablonene-Ausnehmungen inzisale und/oder okklusale Bereiche von Zähnen passen,
In vorteilhafter Ausgestaltung ist es vorgesehen, dass in der Okklusalebene eine Biss-Sperre der Transferschablone, die einen Zahnreihenschluss verhindert, vorgesehen ist, die Dicke welcher Sperre insbesondere etwa 2 bis 8 mm beträgt.

In vorteilhafter Ausgestaltung ist es vorgesehen, dass die Zahn-Ausnehmungen von der Biss-Sperre ausgehend in einander entgegengesetzten Richtungen, die Oberkiefer und Unterkiefer entsprechen, offen sind.

In vorteilhafter Ausgestaltung ist es vorgesehen, dass Zähne in der Ausnehmungen der Transferschablone gehalten sind und insbesondere die Transferschablone für die Zähne zum basalen Einkürzen der Zähne verwendbar ist.

Ein solcher Artikulator vermag die Bewegungsabläufe des menschlichen Kiefers zu simulieren. Das Kiefergelenk als solches bewegt sich bei einer Absenkung der Bisslage oder einer Erhöhung derselben nach dem Prinzip einer Türangel, d.h., eine Anhebung im anterioren Bereich um 3 mm entspricht derjenigen im Mastikationsbereich zirka 1/3 bis 1 mm.

Die Gelenksgeometrie unterscheidet sich je nach Artikulatortyp. Um diese Vielfalt an Gelenksgeometrien zu ermöglichen, wird die vertikale Absenkung für alle Artikulatoren in gleicher Weise vorgenommen. Der Adapter im Artikulator ist für die Gelenkgeometrie gleich. Dadurch bleibt die Gelenksgeometrie nicht angetastet.

Durch diesen Adapter im Artikulator werden die Zahnreihen der oberen und unteren Prothese in Kontakt, also in Okklusion gebracht. Durch diese Möglichkeit kann die zentrische Lage der Zahnreihen des Ober- und Unterkiefers überprüft, gegebenenfalls schleiftechnisch nachjustiert werden. Im Fall von funktionellen Retuschen kann die dynamische Justierung und das selektive Einschleifen spezifisch im Artikulator erfolgen. Dazu werden dann je nach Artikulatortyp zumindest die Gelenksneigung und der Benettwinkel als Mindestanforderung eingestellt.

In vorteilhafter Ausgestaltung ist es vorgesehen, dass die Transferschablone wiederverwendbar ist.

In vorteilhafter Ausgestaltung ist es vorgesehen, dass insbesondere durch die CAD/CAM-Vorrichtung ein Abstand zwischen Zahnpositionen für Oberkiefer- und Unterkieferprothese festlegbar ist, der mit der vertikalen Verschiebeachse des Artikulators/Okkludators korreliert ist.

Weitere Vorteile, Einzelheiten und Merkmale ergeben sich aus der nachstehenden Beschreibung eines Ausführungsbeispiels anhang der Zeichnung.

Es zeigen:
- Fig. 1: eine schematisch dargestellte erfindungsgemäße Ausführungsform der Dental-Transferschablonenanordnung in Vorderansicht;
- Fig. 2: die Ausführungsform der Dental-Transferschablonenanordnung gemäß Fig. 1 in Draufsicht (ohne Prothesenbasis dargestellt);
- Fig. 3: die Ausführungsform der Dental-Transferschablonenanordnung gemäß Fig. 1 in Seitenansicht;
- Fig. 4: eine weitere Ausführungsform der Dental-Transferschablonenanordung (ohne Transferschablone dagestellt);
- Fig. 5: die Ausführungsform gemäß Fig. 4 in Seitenansicht;
- Fig. 6: die Ausführungsform gemäß Fig. 4 in Seitenansicht;
- Fig. 7: die Haltevorrichtung und eine Ausführungsform der Dental-Transferschablonenanordnung;
- Fig. 8: der Distanzhalter und dessen Anordnung in der Kavität der Prothesenbasis; und
- Fig. 9: ein schematisch dargestellter Artikulator mit Prothesen.

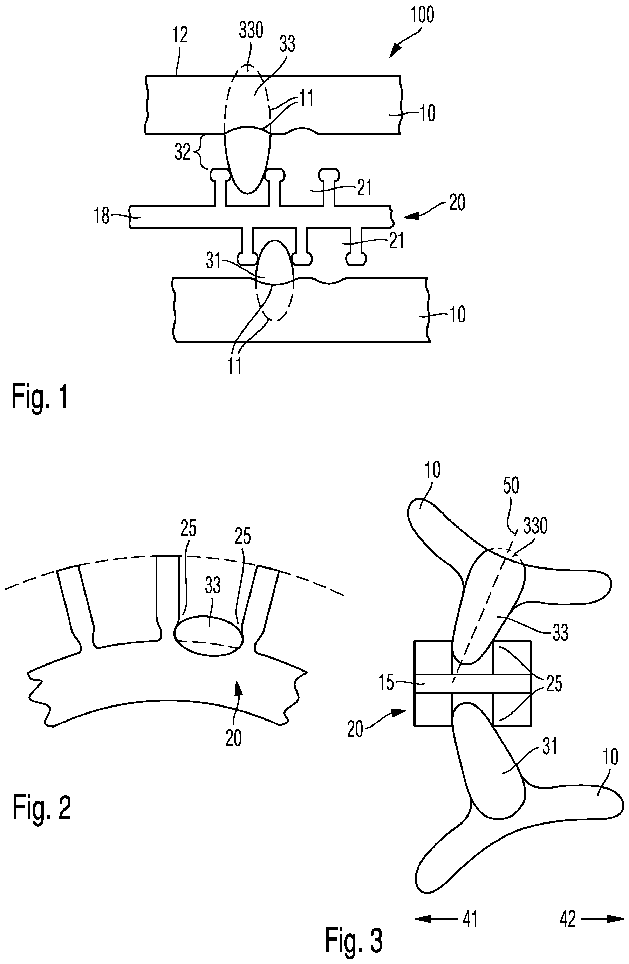

Die in Fig. 1 dargestellte Dental-Transferschablonenanordnung 100 weist eine Transferschablone 20 und zwei Prothesenbasen 10 je für Ober- und Unterkiefer auf, wobei die Transferschablone und die Prothesenbasen eine Vielzahl der Ausnehmungen 21 und 11 für Schneidezähne aufweisen, von denen die Schneidezähne 31 und 33 in Fig. 1 dargestellt sind. In die Transferschablonen-Ausnehmungen 21 passen inzisale und/oder okklusale Bereiche und in die Prothesenbasis-Ausnehmungen 11 passen zervikale Bereiche der Zähne 31 und 33. Die Schneidezähne 31 und 33 sind je in die Prothesenbasis-Ausnehmungen 11 einzukleben.

Die Transferschablone 20 weist erfindungsgemäß in der Okklusalebene eine Biss-Sperre 18 auf, die einen Zahnreihenschluss verhindert und deren Dicke insbesondere etwa 1,5 bis 8 mm beträgt.

Diese Biss-Sperre 18 unterteilt die Transferschablone 20 in je ein Oberkieferteil und ein Unterkieferteil und steift die Transferschablone 20 aus, wenn die Transferschablone 20 gleichzeitig für die Zähne an den Ober- und Unterkiefer, wie in Fig. 1 dargestellt, verwendet ist.

Die Zahn-Ausnehmungen 21 sind von der Biss-Sperre 18 ausgehend in einander entgegengesetzten Richtungen, die Oberkiefer und Unterkiefer entsprechen, offen.

Die Zähne 31 und 33 werden mittels der Transferschablone 20 in beliebiger geeigneter Weise, in die Kavitäten/Ausnehmungen 11 der Prothesenbasen 10 eingebracht, indem die Zähne 31 und 33 beispielsweise mit Wachs, Harz oder einem anderen Klebstoff in den Innenflächen der Ausnehmungen 21 der Transferschablone 20 vorläufig gesichert werden oder mit Hilfe der Verformungskraft von den Innenflächen der Ausnehmungen 21 der Transferschablone die Zähne 31 und 33 in der Transferschablone 20 gehalten sind. Bevorzugt ist die Transferschablone 20 zur besseren Kontrolle der positionierten Zähne aus transparentem Kunststoff hergestellt.

Anschließend werden die Zähne 31 und 33 je mit Hilfe der Transferschablone 20 in die Prothesenbasen 10 positioniert und eingeklebt.

An der vestibulären Seite der Zähne 31 und 33 sind erfindungsgemäß Fenster-Aussparungen der Transferschablone 20 angeordnet, um die korrekte Höhenlage der Zähne 31 und 33 in den Innenflächen der Ausnehmungen 21 in der Transferschablone 20 zu kontrollieren.

Der die basale Seite 12 der Prothesenbasis 10 durchtretende Bereich 330 des Zahnes 33 wird im Wesentlichen bündig entfernt, insbesondere beschliffen oder abgefräst.

In der Ausführungsform gemäß Fig. 1 legen die Ausnehmungen 21 der Transferschablone 20 die Position der Zähne 31 und 33 im Raum so fest, dass jeder Zahn zu etwa 30% von der Transferschablone 20 gehalten ist. In einer weiteren Ausführungsform beträgt dieser Wert 5% bis 90%.

Die in Fig. 1 dargestellte Transferschablone 20 wird mit den Prothesenbasen 10 dergestalt zusammengeführt, dass die die Zähne 31 und 33 umgebende Transferschablone 20 keinen physikalischen Kontakt mit den Prothesenbasen 10 hat. Es ist ein die Zähne 31 und 33 umgebender Freiraum 32, dessen Höhe insbesondere etwa 20% der Zahnlänge beträgt, vorgesehen.

In einer weiteren Ausführungsform (nicht dargestellt) sind die Transferschablone und die Prothesenbasen im aufeinandergesetzten Zustand über eine Mehrzahl, insbesondere drei Stützstellen, aneinander abgestützt und in eine definierte Relativposition bei eingesetzten Zähnen gebracht.

In Fig. 2 ist gemäß Fig. 1 eine erfindungsgemäße Transferschablone 20 mit dem gehaltenen Zahn 33 in Draufsicht dargestellt. Aus der Verbindung von Fig. 2 und 3 ist es ersichtlich, dass der Zahn 33 mindestens drei Stützstellen 25 an der Transferschablone 20 hat, damit der Zahn 33 in den Ausnehmungen 21 der Transferschablone 20 gesichert werden kann.

In einer bevorzugten Ausführungsform werden die Zähne 31 und 33 mit Hilfe der Verformungskraft von den Stützstellen 25 der Innenflächen der Ausnehmungen 21 der Transferschablone 20 in allen drei Raumrichtungen fest gelagert.

In Fig. 3 ist gemäß Fig. 1 eine erfindungsgemäße Dental-Transferschablonenanordnung 100 in Seitenansicht dargestellt. Die Pfeile 41 und 42 weisen in die labiale und die linguale Richtung. In der in Fig. 3 dargestellten Ausführungsform beträgt ein Winkel zwischen der vertikalen Achse und der Wurzelachse 50 etwa 10° bis 35°.

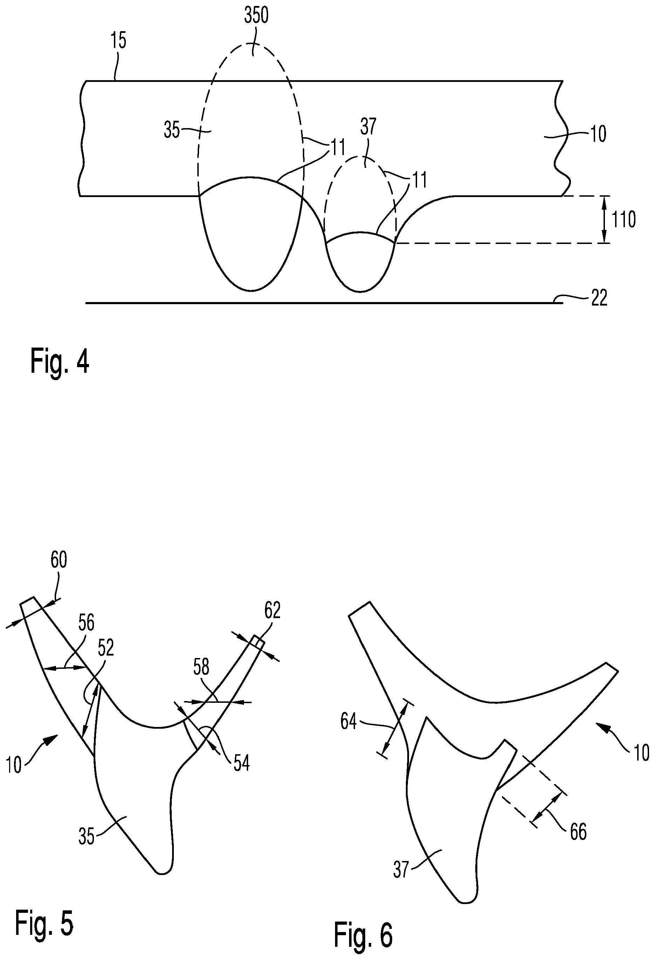

Eine weitere erfindungsgemäße Ausführungsform ist in Fig. 4 dargestellt. Es ist ersichtlich, dass die Höhe des dortigen (konfektionierten) Zahnes 35 vergleichweise zu groß für die Prothesenbasis 10 ist. Wenn der Zahn 35 ohne weitere Bearbeitung in die Kavität der Prothesenbasis 10 eingeklebt wird, entsteht dann ein starker Störkontakt in der Okklusalebene. Darüber hinaus besteht die Gefahr, dass bei der Mastikationsbewegung der Zahn 35 instabil in der Kavität der Prothesenbasis 10 gehalten ist und eventuell sogar aus der Prothesenbasis 10 herausfällt, und zwar wegen der auf vertikaler Ebene proportional mit den Flächenausdehnungen des Zahnes 35 zu geringen Klebefläche des Zahnes 35 an der Prothesenbasis 10. Gemäß der Hebelwirkung ist der der Klebekraft entsprechende Lastarm etwa kürzer als während der Mastikationsbewegung der der Reibungskraft entsprechende Kraftarm.

Erfindungsgemäß ist es günstig, dass sich der Zahn 35 in der Prothesenbasis 10 mit Hilfe der Transferschablone 20 (nicht dargestellt) labial nach unten bis zu der Okkusalebene 22 zur Vermeidung des Störkontaktes sichern lässt, wie es in Fig. 4 dargestellt. Wegen der größeren Länge des Zahnes 35 durchtritt der Zahn 35 die Basalfläche 15 der Prothesenbasis 10. Hierdurch wird die Klebefläche vergrößert. Der durchtretende Bereich 350 wird dann erfindungsgemäß beschliffen. Konsequent ist die Lastarm-Kraftarm-Verhältnis verbessert und daher eine sichere Klebung gewährleistet.

Gemäß Fig. 4 ist ferner ein Zahn 37 vorgesehen, dessen Höhe vergleichweise zu klein für die Prothesenbasis 10 ist. Falls der Zahn 37 in sich bekannter Weise in die Kavität der Prothesenbasis 10 eingeklebt wird, ist auch wegen der Hebelwirkung beim Kauen, wie beim oben genannten Fall des Zahnes 35, die Klebefläche zu gering, um eine sichere Klebung zu gewährleisten.

Erfindungsgemäß ist es besonders günstig, dass die CAD-Software zur Herstellung der Prothesenbasis vor der Gefahr warnt, dass keine ausreichende Klebefläche zur Verfügung steht.

Erfindungsgemäß ist es weiter günstig, dass die Kavität 11 der Prothesenbasis 10 unter der Steuerung durch die CAD/CAM-Vorrichtung so umgebildet wird, dass sich der zervikale Bereich der Kavität 11 in die inzisale Richtung erstreckt. Die Erstreckungsausdehnung wird in Fig. 4 als Höhe 110 bezeichnet. Die in Fig. 4 dargestellte verlängerte Kavität 11 der Prothesenbasis 10 ermöglicht erfindungsgemäß eine zusätzliche Klebefläche des Zahnes 37 an der Prothesenbasis 10. Hierdurch wird eine sichere Klebeverbindung gewährleistet.

In Fig. 5 und Fig. 6 sind Zähne 35 und 37 in Seitenansicht dargestellt.

Die Dicke des Kragenbereiches der Prothesenbasis 10 beim Zervikalrand der Zähne 35 und 37 labial 56 (bzw. bukkal) und palatinal 58 (bzw. lingual) muss mehr als 2 mm sein.

Die Dicke am minimal höchsten Punkt (2 mm) des Kragenbereiches 60 und 62 muss mehr als 0,5 mm sein. Danach kann die Dicke auslaufend sein.

Erfindungsgemäß ist es günstig, dass die Eckwerte bezüglich der Minimalanforderungen der Klebung in der CAD-Software einstellbar sind, wobei hier zwei Fälle beispielhaft erläutert werden:
Fall 1 - Klebung ohne oder teilweise mit basalem Kontakt zur Prothesenbasis 10 entsprechend dem Zahn 35 gemäß Fig. 5:
minimale Höhe des Kragenbereiches 52 und 54 der Prothesenbasis 10 muss mehr als 2 mm sein, über 360° rundum;

Fall 2 - Klebung mit vollem basalen Kontakt zur Prothesenbasis 10 entsprechend dem Zahn 37 gemäß Fig. 6:
minimale Höhe des Kragenbereiches 64 und 66 der Prothesenbasis 10 muss mehr als 2 mm sein, über 180° rundum, bevorzugt labial und palatinal (bzw. bukkal und lingual) einschließlich, und die minimale Höhe des Kragenbereiches der Prothesenbasis 10 für den restlichen 180° muss mehr als 1 mm sein.

Im Fall 1 sollte optimale Kragenhöhe mehr als 3 mm sein, wobei ein Wulst oder eine Ummantelung vorgesehen ist, die eine Verlängerung der Kavität 11 der Prothesenbasis 10 in Fig. 4 dargestellt, wobei sich mindestens 50% der Ummantelung bevorzugt im lingualen bzw. palatinalen Bereich befindet.

Erfindungsgemäß ist es weiter günstig, dass basierend auf den obigen Eckwerten die minimale Klebefläche, die eine sichere Klebung des Zahnes an der Prothesenbasis gewährleistet, ausgerechnet werden kann und insbesondere in der CAD-Software zur Herstellung der Prothesenbasis 10 festgelegt ist.

Wird die momentan kleinste Zahnform A3 der Anmelderin ohne Basalmulde herangezogen, beträgt der Umfang des Zahnes A3 gemessen in der Kragenhöhenmitte 14,6 mm und die Bodenfläche des Zahnes A3 16,97 mm² (der nachfolgende Algorithmus ist bei alternativen Zahnformen mit anderen Größen oder von anderen Firmen auch anwenbar).

Im oben genannten Fall 1, nämlich Klebung ohne oder teilweise mit basalem Kontakt zur Prothesenbasis, ergibt sich eine minimale Klebefläche von 14,6 mm × 2 mm = 29,2 mm²

Im oben genannten Fall 2, nämlich Klebung mit vollem basalen Kontakt zur Prothesenbasis, soll die gesamte Klebefläche aus der Kombination der Kragenfläche und Basalfläche ausgerechnet werden, wobei sich die minimale Klebefläche so ergibt:
- Kragenfläche über 180°mit 2 mm Höhe = 14,6 mm / 2 × 2 mm = 14,6 mm²;
- Kragenfläche über 180° mit 1 mm Höhe = 14,6 mm / 2 × 1 mm = 7,3 mm²;
- Basalfläche mit vollem basalen Kontakt zur Prothesenbasis =16,97 mm²;
- minimale Klebefläche = 14,6 mm² + 7,3 mm² + 16,97 mm² = 38,87 mm².

Gemäß dem Moffit-Verbundtest (Aushebeltest) ergibt sich für die Zähne mit den oben genannten minimalen Klebeflächen eine Bruchlast um 500N. Hierbei ist es günstig, unmittelbar vor der Klebung ein Aufrauhen vorzunehmen, bevorzugt mittels Sandstrahlen mit Aluminiumoxid-Partikeln mit einer Korngröße von 100 µm und einem Druck von 1 bis 2 bar. Ferner kann es vorteilhaft sein, die Klebeflächen vorzubenetzen, z.B. mit ProBase cold Monomer der vorliegenden Anmelderin, insbesondere, wenn Komposit-Zähne verwendet werden, bei denen die Schneideschicht bios in den zervikalen Bereich hineinreicht.

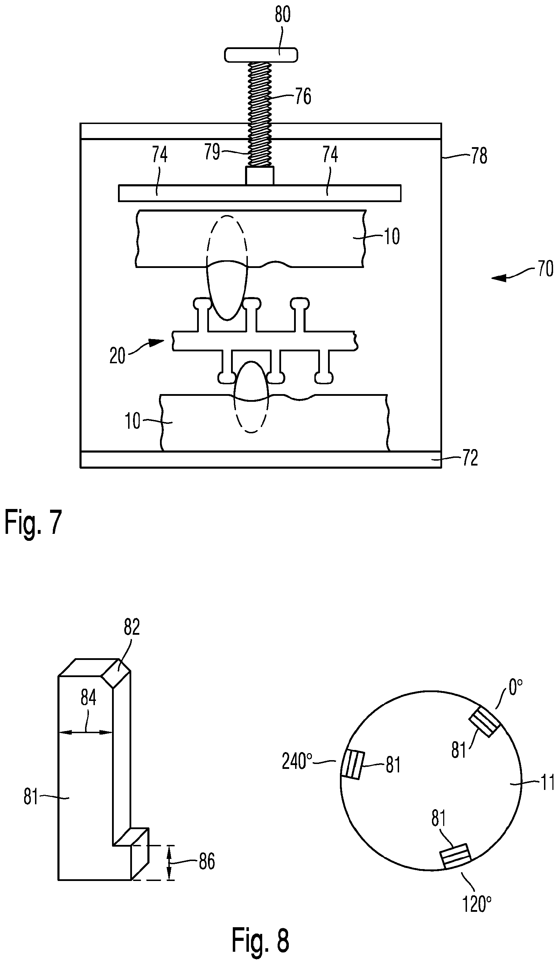

In Fig. 7 ist eine Haltevorrichtung 70 für die Unterkiefer- und/oder Oberkieferprothese dargestellt, welche Vorrichtung die Fixierung der Zähne an den Prothesenbasen 10 oder das Aushärten des Klebers unterstützen/sichern kann.

Die Haltevorrichtung 70 weist ein Substrat 72, einen Rahmen 78, mindestens drei Balken 74 (nur zwei davon in Fig. 7 dargestellt), einen Stempel 79 mit Gewinde 76 und einen Drehgriff 80 auf.

Die Prothesenbasen 10 zusammen mit den Zähnen in den Kavitäten dieser und mit der Transferschablone 20 können auf das Substrat 72 der Haltevorrichtung 70 aufgebracht werden und dort fixiert werden.

Die Balken 74 sind durch Drehen des Drehgriffs 80 in der vertikalen Richtung über den Stempel 79 heb- und senkbar. Wenn gemäß Fig. 7 die Balken 74 nach unten bis zur Oberseite der oberen Prothesenbasis 10 und noch weiter abgesenkt werden, wird ein Druck von den Balken 74 nach unten über diese Prothesenbasis 10 auf die Zähne, die Transferschablone 20 und die untere Prothesenbasis 10 ausgeübt.

Die beiden Prothesenbasen 10 werden dann von den Balken 74 und dem Substrat 72 der Haltevorrichtung 70 eingespannt und so eine Fixierung der Zähne an den Prothesenbasen 10 und ein Aushärten des Klebers unterstützt. Eine mittige Anordnung des Stempels 79 ergibt eine gleichmäßige Haltekraft.

Erfindungsgemäß ist es weiter günstig, dass in der CAD-Software der Klebespalt zwischen Zähnen und Prothesenbasis mit 100 µm definiert ist. Ist bei der Positionierung und der Klebung die Zähne in die Kavitäten der Prothesenbasis 10 genauer zu zentrieren und es ist erwünscht, den Klebespalt von 100 µm um die Zähne herum zu sichern, werden erfindungsgemäß günstig mindestens drei Distanzhalter 81, wie in Fig. 8 dargestellt, verwendet. Ohne Distanzhalter betrug der Klebespalt zwischen 78 und 160µm, mit diesen war die Breitenschwankung nicht meßbar.

Die Zahn-Ausnehmung 11 der Prothesenbasis 10 ist gemäß Fig. 8 in Draufsicht dargestellt. Die drei Distanzhalter 81 sind an der Innenfläche der etwa kreisförmigen Zahn-Ausnehmung 11 120° voneinander entfernt nach innen vorragend senkrecht verlaufend zu der horizontalen Ebene angeordnet.

Das Oberteil 82 der Distanzhalter 81 ist zum leichten Einführen der Zähne in die Kavität 11 der Prothesenbasis 10 abgewinkelt. Der seitliche Abstand und der basale Abstand zwischen Zähnen und der Kavität der Prothesenbasis 10, welche Abstände als Klebespalt durch die Distanzhalter 81 ermöglicht werden, entsprechen jeweils der Länge 84 und der Höhe 86, welche je 100 µm betragen.

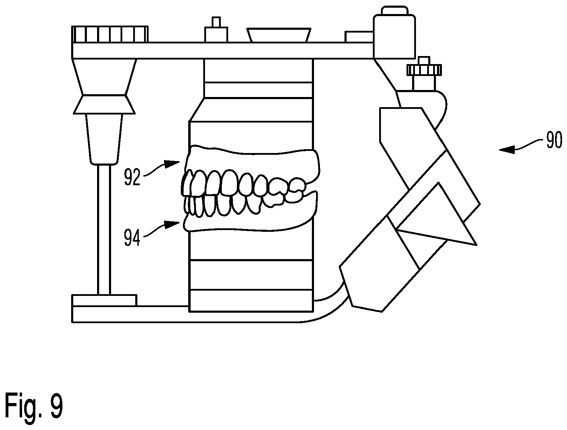

In Fig. 9 ist ein Artikulator 90 mit Prothesen schematisch dargestellt. Die fertigen Prothesen mit dem Oberkieferteil 92 und dem Unterkieferteil 94 werden in diesen um die vertikale Achse verschiebbaren Artikulator eingebracht, um eine okklusale Korrektur an den Prothesenzähnen vorzunehmen.

## Patentansprüche

1. Dental-Transferschablonenanordnung, mit einer Transferschablone und einer Prothesenbasis, die insbesondere beide mit der gleichen CAD/CAM-Vorrichtung hergestellt sind,
- wobei die Prothesenbasis eine Vielzahl von Ausnehmungen für Zähne aufweist, wobei in die Prothesenbasis-Ausnehmungen zervikale Bereiche von Zähnen passen,
- wobei die Zähne je in die Prothesenbasis-Ausnehmungen einzukleben sind, **dadurch gekennzeichnet,**
- **dass** die Klebefläche jedes Zahnes (31, 33, 35, 37) in der Prothesenbasis (10) einen vorgegebenen minimalen Schwellenwert, insbesondere mindestens 10 mm², bevorzugt mindestens 18 mm², und besonders bevorzugt mindestens 25 mm², aufweist, welcher Schwellenwert insbesondere in der CAD-Software der CAD/CAM-Vorrichtung zur Herstellung der Prothesenbasis festgelegt ist, und
- **dass** die CAD/CAM-Vorrichtung bei der Festlegung der Höhenlage der Zähne in den Ausnehmungen (11) der Prothesenbasis dort einen Klebespalt mit einer vorgegebenen Dicke, insbesondere teilweise 0 µm bis 500 µm, bevorzugt 50 µm bis 250 µm, berücksichtigt, dass also die Außenform um diesen Spalt größer als der zervikale Bereich der Zähne ausgelegt und so die Höhenlage jedes Zahns exakt festgelegt ist.

2. Transferschablonenanordnung nach Anspruch 1, **dadurch gekennzeichnet, dass**
- die Biss-Sperre (18) entlang der vestibulären Seite die Transferschablone (20) horizontal an den zu haltenden Zähnen (31, 33, 35, 37) und etwa in mittlerer Höhe der Transferschablone (20) angeordnet ist, und
- dass die Biss-Sperre (18) die Transferschablone (20) aussteift, wenn die Transferschablone (20) gleichzeitig für die Zähne (31, 33, 35, 37) an den Ober- und Unterkiefer verwendet ist, und
- dass die Biss-Sperre (18) die Transferschablone (20) in je ein Oberkieferteil und ein Unterkieferteil unterteilt.

3. Transferschablonenanordnung nach einem der vorhergehenden Ansprüche, **dadurch gekennzeichnet, dass** die CAD/CAM-Vorrichtung die Transferschablone (20) basierend auf Scan- und CAD-Daten erzeugt, welche beiden Daten jeweils aus einem dreidimensionalen Scan einer Mundsituation eines Patienten und aus einer Schablonenbibliothek in der CAD-Software gewonnen sind und die Prothesenbasis (10) basierend auf insbesondere den gleichen Scandaten und den CAD-Daten aus einer Prothesenbasisbibliothek in der CAD-Software erzeugt, und dass zervikale Bereiche von Zähnen unter Verwendung der Transferschablone (20) in die Prothesenbasis-Zahnausnehmungen (11) je einbringbar und dort einklebbar sind.

4. Transferschablonenanordnung nach einem der vorhergehenden Ansprüche, **dadurch gekennzeichnet, dass** die Transferschablone (20) in ihrer Schablonenform mit Ausnehmungen (21) für Zähne (31, 33, 35, 37) passend zu einem Zahnersatz einer Prothesenbasis (10), insbesondere per Rapid-Prototyping oder per Fräsen, erzeugt ist, und dass die Innenflächen der Ausnehmungen (21) in der Transferschablone (20), die den ocklusalen/inzisalen Außenflächen der Zähne (31, 33 , 35, 37) entsprechen, basierend auf einer Zahnbibliothek erzeugt sind, welche Außenflächen in der CAD/CAM-Vorrichtung entsprechend insbesondere vorgefertigten Zähnen abgespeichert sind.

5. Transferschablonenanordnung nach einem der vorhergehenden Ansprüche, **dadurch gekennzeichnet, dass** der Schwellenwert unterschiedlich für unterschiedliche Zahntypen ist - Schneidezähne, Eckzähne, Prämolaren und Molaren - und zur entsprechenden Anpassung der Prothesenbasis (10) eine Vergrößerung der Klebefläche durch die CAD-Software der CAD/CAM-Vorrichtung anforderbar ist.

6. Transferschablonenanordnung nach einem der vorhergehenden Ansprüche, **dadurch gekennzeichnet, dass** der Schwellenwert unterschiedlich für unterschiedliche Zähne ist, insbesondere für konfektionierte Zähne mit unterschiedlichen Zahnlängen, und zur entsprechenden Anpassung der Prothesenbasis (10) eine Vergrößerung der Klebefläche durch die CAD-Software der CAD/CAM-Vorrichtung anforderbar ist.

7. Transferschablonenanordnung nach einem der vorhergehenden Ansprüche, **dadurch gekennzeichnet, dass** zur Vergrößerung der Klebefläche der zervikale Bereich der Ausnehmungen (11) der Prothesenbasis (10) in die inzisale/okklusale Richtung mittels der CAD/CAM-Vorrichtung verlängerbar ist.

8. Transferschablonenanordnung nach einem der vorhergehenden Ansprüche, **dadurch gekennzeichnet, dass** bei der Berechnung der Flächen der Ausdehnungen in der Transferschablone (20) ein herstellungsbedingter Schrumpfungsfaktor der Zähne, insbesondere der konfektionierten Zähne, einbezogen ist, welcher Faktor den Schrumpfungsgrad der Zähne (31, 33, 35, 37), insbesondere etwa ±100 µm, wiedergibt.

9. Transferschablonenanordnung nach einem der vorhergehenden Ansprüche, **dadurch gekennzeichnet, dass** die Höhenlage der Zähne (31, 33, 35, 37) in der Transferschablone (20) basierend auf CAD- und Scandaten und damit indirekt auf Patientendaten festgelegt ist und dass die Prothesenbasis (10) durchtretende Bereiche eines Zahns (31, 33, 35, 37), dessen Höhe größer ist als die Höhenerstreckung von Transferschablonen (20) und Prothesenbasis (10) und im aufeinander gelegten Zustand dieser, mit umgebenden Oberflächen im Wesentlichen bündig abschleifbar ist.

10. Transferschablonenanordnung nach einem der vorhergehenden Ansprüche, **dadurch gekennzeichnet, dass** die Transferschablone (20) durch die CAD/CAM-Vorrichtung erzeugte Zahn-Ausnehmungen (21) aufweist, die so eine Position des Zahns (31, 33) im Raum festlegen, wobei jeder Zahn (31, 33) mit einem Anteil seiner Längserstreckung von der Transferschablone (20) gehalten ist.

11. Transferschablonenanordnung nach einem der vorhergehenden Ansprüche, **dadurch gekennzeichnet, dass** die Transferschablone (20) und die Prothesenbasis (10) im zusammengesetzten Zustand einen die Zähne (31, 33) umgebenden Freiraum (32) belassen, dessen Höhe einem Anteil der Höhe der Zähne (31, 33) entspricht.

12. Transferschablonenanordnung nach einem der vorhergehenden Ansprüche, **dadurch gekennzeichnet, dass** die Transferschablone (20) und die Prothesenbasis (10) im aufeinandergesetzten Zustand über eine Mehrzahl, insbesondere drei Stützstellen, aneinander abgestützt und in eine definierte Relativposition bei eingesetzten Zähnen (31, 33) gebracht sind.

13. Transferschablonenanordnung nach einem der vorhergehenden Ansprüche, **dadurch gekennzeichnet, dass** die Transferschablone (20) zusammen mit der Prothesenbasis (10) eingesetzte Zähne in allen drei Raumrichtungen fest lagert, und dass in diesem Zustand die basale Bereiche der Zähne (31, 33), die die Prothesenbasis durchtreten, ohne zusätzliche und separate Stützkontakte für die einzelnen Zähne (31, 33) abschleif- oder abfräsbar sind.

14. Transferschablonenanordnung nach einem der vorhergehenden Ansprüche, **dadurch gekennzeichnet, dass** die Klebeflächen, insbesondere unmitttelbar vor der Klebung, aufgerauht sind, bevorzugt mittels Sandstrahlen mit Aluminiumoxid-Partikeln mit einer Korngröße von 100 µm und einem Druck von 1 bis 2 bar, und/oder die Klebeflächen vorbenetzt sind.

15. Transferschablonenanordnung nach einem der vorhergehenden Ansprüche, **dadurch gekennzeichnet, dass** auf der vestibulären Seite an jedem Zahn Fenster-Aussparungen der Transferschablone angeordnet sind, so dass die korrekte Höhenlage der Zähne in den Innenflächen der Ausnehmungen (21) in der Transferschablone (20) kontrollierbar ist.
